## Europäisches Patentamt
## European Patent Office
## Office européen des brevets

(19)

(11) Veröffentlichungsnummer: **0 147 592**
**A1**

(12) # EUROPÄISCHE PATENTANMELDUNG

(21) Anmeldenummer: **84113643.5**

(22) Anmeldetag: **12.11.84**

(51) Int. Cl.⁴: **H 02 H 7/22**
**H 01 H 1/60**

(30) Priorität: **27.12.83 DE 3347185**

(43) Veröffentlichungstag der Anmeldung:
**10.07.85 Patentblatt 85/28**

(84) Benannte Vertragsstaaten:
**CH DE FR IT LI SE**

(71) Anmelder: **Siemens Aktiengesellschaft**
**Berlin und München Wittelsbacherplatz 2**
**D-8000 München 2(DE)**

(72) Erfinder: **Dörfler, Rudolf, Dipl.-Ing.**
**Am Ruhstein 36**
**D-8520 Erlangen(DE)**

(72) Erfinder: **Moerman, Boudewijn**
**Am tiefen Weg 8**
**D-8524 Dormitz(DE)**

(72) Erfinder: **Voigt, Rolf**
**Schuckertstrasse 14**
**D-8000 München 70(DE)**

(72) Erfinder: **Krause, Kurt**
**Klaushagerweg 9b**
**D-1000 Berlin 28(DE)**

(72) Erfinder: **Schnabel, Rudolf, Dipl.-Ing.**
**Schwarzmannstrasse 12**
**D-8501 Fürth(DE)**

(72) Erfinder: **Weidner, Georg**
**Egererstrasse 42**
**D-8450 Amberg(DE)**

(72) Erfinder: **Kummerow, Gerd, Dr.**
**Hagenplatz 3C**
**D-1000 Berlin 33(DE)**

(72) Erfinder: **Schröther, Gerhard, Dipl.-Ing.**
**Hegnerstrasse 12**
**D-8450 Amberg(DE)**

(72) Erfinder: **Zentgraf, Lothar, Dipl.-Ing.**
**Waldstrasse 18**
**D-8525 Uttenreuth(DE)**

(54) **Einrichtung zur Kontrolle der Betriebsfähigkeit von Schaltgeräten.**

(57) Die Erfindung bezieht sich auf eine Einrichtung zur Kontrolle der Betriebsfähigkeit von Schaltgeräten unter Verwendung einer oder mehrerer Integrationsstufen zur Erfassung der Schaltkapazität. Es sind eine oder mehrere Erfassungseinrichtungen (3,4,5,11,15,16,17,18,19,20,21) vorgesehen, die den Gerätezustand, insbesondere die Schaltkapazität, wiedergeben. Die Sensoren sind über eine Verarbeitungsstufe (9) mit dem Schalterantrieb (14) des Schalters (2) in Wirkverbindung gebracht. Die Stromsensoren (3 bis 5), zusammen mit der Zählvorrichtung (11) können das ∫ i.n.dt, d.h. ein Maß für die Beanspruchung des Schaltgerätes, wiedergeben und hiermit den Antrieb des Gerätes (2) sperren. Die Erfassungseinrichtung (15 bis 18) kann den Isolationszustand der Löschkammer, den Zustand der Kontakte und der Mechanik sowie die Temperaturverteilung am Schaltgerät und den Anschlußleitungen erfassen. Die erfindungsgemäße Einrichtung dient zum Früherfassen von nicht mehr betriebsbereiten Schaltgeräten, so daß diese vorzeitig ausgewechselt werden können.

EP 0 147 592 A1

./...

Siemens Aktiengesellschaft    Unser Zeichen
Berlin und München            VPA 83 P 3445 E

Einrichtung zur Kontrolle der Betriebsfähigkeit von
Schaltgeräten

Die Erfindung bezieht sich auf eine Einrichtung zur Kontrolle der Betriebsfähigkeit von Schaltgeräten unter Verwendung einer oder mehrerer Integrationsstufen zur Erfassung der Schaltkapazität.

Bei einer bekannten Einrichtung der obengenannten Art (DE-OS 1 936 552) wird das Stromzeitintegral einer Kondensatorentladung beispielsweise von einem Magnetmotorzähler gemessen. Der Zähler muß hier jedoch noch abgelesen werden.

Der Erfindung liegt die Aufgabe zugrunde, eine Möglichkeit zu schaffen, die Einschaltung des Gerätes zu blockieren, sofern das Schaltgerät die zu erwartende Belastung nicht mehr aushält. Dies wird auf einfache Weise dadurch erreicht, daß die Integrationsstufen und weitere Erfassungseinrichtungen über eine Verarbeitungsstufe mit dem Schaltgeräteantrieb in Wirkverbindung stehen. Mit geringem Mehraufwand läßt sich das Ende der Lebensdauer des Schaltgerätes noch genauer bestimmen, wenn eine Erfassungseinrichtung für den Isolationszustand der Löschkammer vorhanden ist und/oder eine Erfassungseinrichtung für den Zustand der Kontakte vorhanden ist bzw. eine Erfassungseinrichtung für den Zustand der Mechanik vorhanden sind.

La 2 Syr / 30.10.1984

Ist eine Erfassungseinrichtung in Form eines Temperaturfühlers für die Temperatur am Schaltgerät und/oder an deren Anschlußleitungen vorhanden, so kann zusätzlich eine Herabsetzung des Schaltvermögens des Schaltgerätes durch erhöhte Umgebungstemperatur mit berücksichtigt werden. Diese Erfassungen lassen sich kostengünstig durchführen, wenn die Daten der Erfassungseinrichtung gemeinsam auf einem Mikrocomputer oder Mikroprozessor als Verarbeitungsstufe geführt sind.

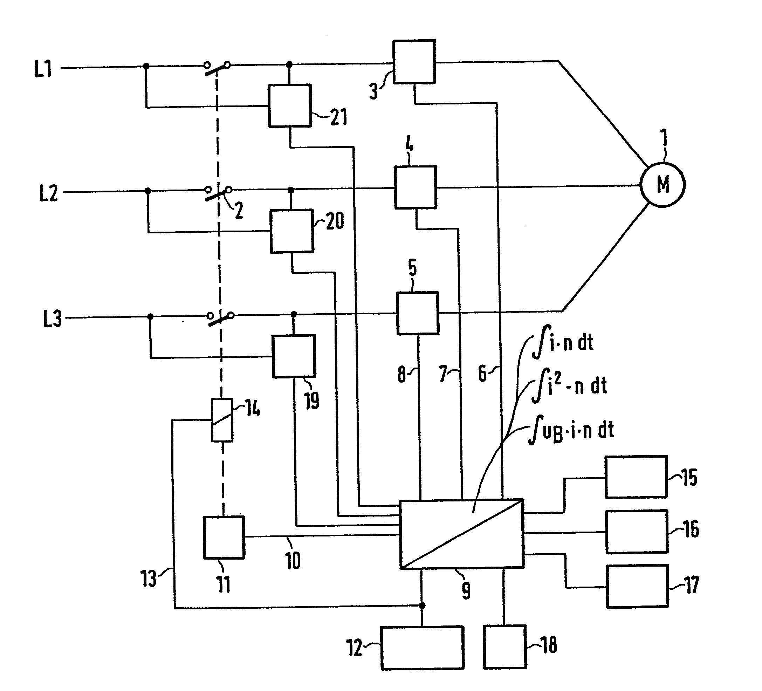

Anhand der Zeichnung wird ein Ausführungsbeispiel gemäß der Erfindung beschrieben und die Wirkungsweise näher erläutert.

Im Ausführungsbeispiel ist der Motor 1 über das Schütz 2 an die Phasen L1, L2, L3 anschließbar. Parallel zu den Kontakten 2 sind Spannungssensoren (19, 20, 21) angeordnet. Zwischen den Kontakten des Schützes 2 und den Motoranschlüssen sind Stromsensoren 3, 4 und 5 eingeschaltet, die über Leitungen 6, 7 und 8 an eine Verarbeitungsstufe 9 geführt sind, die eine Integrationseinheit enthält und der der Ausgangswert 10 einer Zählvorrichtung 11 zugeführt ist, die die Anzahl der Schaltungen des Schützes 2 erfaßt. Überschreitet das $\int i.n.dt$ oder das $\int i^2.n.dt$ oder das $\int u_B.i.n.dt$ einen vorbestimmbaren Wert, d.h. ist die Maximalbeanspruchung des Schaltgerätes erreicht, so kann über die Leitung 13 die Spule 14 des Schützes 2 gesperrt werden. Gleichzeitig kann eine Anzeige des Zustandes über die Anzeigevorrichtung 12 erfolgen. Die Anzeige 12 kann auch so ausgebildet werden, daß entsprechend dem maximalen Wert des $\int i.n.dt$ oder des $\int i^2.n.dt$ oder des $\int u_B.i.n.dt$ die Anzeige den Rest der Schaltkapazität anzeigt, den das Schaltgerät noch verkraften kann. Mit der Zählvorrichtung 11 für die Schaltspiele ist darüber hinaus eine Überwachung der normalen Betriebsschaltungen möglich, d.h. es können hier Hinweise für eine vorbeugende Instand-

- 5 -          VPA 83 P 3445 E

haltung des Schaltgerätes abgeleitet werden. Die Strom-sensoren 3 bis 5 können gleichzeitig zur Überwachung der Betriebsströme, d.h. Überstrom und Kurzschluß, benutzt werden und über die Verarbeitungsstufe 9 zur Auslösung des Schaltgerätes führen. Mit der Verarbeitungsstufe 9, die auch in Form eines Mikroprozessors oder Mikrocomputers ausgebildet sein kann, können weiterhin Erfassungseinrichtungen 15, 16, 17,18 für den Isolationszustand der Löschkammer, für den Zustand der Kontakte und den Zustand der Mechanik des Schaltgerätes sowie für die Temperatur am Schaltgerät und/oder an den Anschlußleitungen angeschlossen werden. Die Erfassung des Schaltzustands durch die Einzelkomponenten 15 bis 18 hat den Vorteil, daß über die Anzeige 12 angezeigt werden kann, welches Teil des Schaltgerätes die Schaltkapazität begrenzt, d.h. wenn die Höhe der Kontaktauflage ein gewisses, noch vertretbares Maß erreicht hat, kann dies durch die Anzeige 12 angezeigt werden, und durch Austauschen der Kontakte kann das Schaltgerät wieder schalttüchtig gemacht werden. Derselbe Sachverhalt kann auftreten, wenn der Isolationszustand der Löschkammer ein Schalten des Schaltgerätes verbietet. Hier kann dann nach entsprechender Anzeige die Löschkammer ausgetauscht werden. Durch den Gegenstand der Erfindung sind somit Betriebsstörungen, die aufgrund des Einschaltens von Schaltgeräten, die keine Schaltreserven mehr haben, entstehen, ausgeschlossen.

8 Patentansprüche
1 Figur

Patentansprüche

1. Einrichtung zur Kontrolle der Betriebsfähigkeit von Schaltgeräten unter Verwendung einer oder mehrerer Integrationsstufen zur Erfassung der Schaltkapazität, d a d u r c h   g e k e n n z e i c h n e t , daß die Integrationsstufen und weitere Erfassungseinrichtungen (3,4,5,11,15,16,17) über eine Verarbeitungsstufe (9) mit dem Schaltgeräteantrieb in Wirkverbindung stehen.

2. Einrichtung nach Anspruch 1, d a d u r c h   g e - k e n n z e i c h n e t ,  daß die Schaltkapazität durch Integralbildung aus dem Quadrat des Schaltstromes (3,4,5), der Schalthäufigkeit (11) und der Zeit erfaßt ist.

3. Einrichtung nach Anspruch 1, d a d u r c h   g e - k e n n z e i c h n e t ,  daß die Schaltkapazität durch Integralbildung aus Schaltstrom (3, 4, 5), Bogenspannung (19, 20, 21), Schalthäufigkeit (11) und der Zeit erfaßt ist.

4. Einrichtung nach Anspruch 1, 2 oder 3, d a d u r c h   g e k e n n z e i c h n e t ,  daß eine Erfassungseinrichtung (15) für den Isolationszustand der Löschkammer vorhanden ist.

5.   Einrichtung nach Anspruch 1, 2, 3 oder 4, d a - d u r c h   g e k e n n z e i c h n e t ,  daß eine Erfassungseinrichtung (16) für den Zustand der Kontakte (2) vorhanden ist.

6. Einrichtung nach einem der vorhergehenden Ansprüche, d a d u r c h   g e k e n n z e i c h n e t ,  daß eine Erfassungseinrichtung (17) für den Zustand der Mechanik vorhanden ist.

7 Einrichtung nach einem der vorhergehenden Ansprüche, d a d u r c h   g e k e n n z e i c h n e t , daß eine Erfassungseinrichtung in Form eines Temperaturfühlers für die Temperatur am Schaltgerät und/oder an deren Anschlußleitungen vorhanden ist.

8. Einrichtung nach einem der vorhergehenden Ansprüche, d a d u r c h   g e k e n n z e i c h n e t , daß die Daten der Erfassungseinrichtungen (3,4,5,11,15,16,17,18, 19,20,21) gemeinsam auf einem Mikrocomputer oder Mikroprozessor als Verarbeitungsstufe geführt sind.

$$\int i \cdot n \, dt$$

$$\int i^2 \cdot n \, dt$$

$$\int u_B \cdot i \cdot n \, dt$$

Europäisches
Patentamt

**EUROPÄISCHER RECHERCHENBERICHT**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| D,Y | DE-A-1 936 552  (BBC)<br>* Insgesamt * | 1 | H 02 H  7/22<br>H 01 H  1/60 |
| | --- | | |
| Y | EP-A-0 103 137  (SIEMENS)<br>* Seite 1, Zeilen 12-21 * | 1 | |
| A | | 8 | |
| | --- | | |
| A | DE-A-2 727 378  (SIEMENS)<br>* Insgesamt * | 1 | |
| | --- | | |
| A | DE-A-2 640 921  (SIEMENS)<br>* Insgesamt * | 1 | |
| | ----- | | |

RECHERCHIERTE SACHGEBIETE (Int. Cl.4)

H 02 H
G 01 R
H 01 H

Der vorliegende Recherchenbericht wurde für alle Patentansprüche erstellt.

| Recherchenort<br>DEN HAAG | Abschlußdatum der Recherche<br>03-01-1985 | Prüfer<br>KOLBE W.H. |
|---|---|---|